# EUROPEAN PATENT APPLICATION

(11) **EP 2 164 275 A1**
(43) Date of publication of application: **17.03.2010**
(21) Application number: 08790575.8
(22) Date of filing: 24.06.2008
(51) Int. Cl.: H04Q 7/38, G01C 21/00, H04B 1/40

(54) **RADIO DEVICE**

(30) Priority: 25.06.2007 JP 2007166562
(71) Applicant: Kabushiki Kaisha Kenwood, Hachiouji-shi, Tokyo 192-8525 (JP)
(72) Inventor: NUMAI, Yoshiaki, Sagamihara-shi Kanagawa 229-0011 (JP)
(74) Representative: Busch, Thomas
(86) International application number: PCT/JP2008/061436
(87) International publication number: WO 2009/001810

(57) **Abstract**

Abstract: If it is judged that audio information is being transmitted when transmitting position information by a control unit, a wireless apparatus of a mobile station side embeds the position information in an empty packet of audio information being transmitted by the control unit and causes a wireless communication unit to transmit the packet to a wireless apparatus of a base station side. Thus, it is possible to perform accurate position management even when an audio communication is present.

## Description

### TECHNICAL FIELD

The present invention relates to a wireless apparatus.

### BACKGROUND ART

Vehicle management systems using wireless apparatuses have been constructed. In those systems, wireless apparatuses are installed in a moving vehicle (mobile station) and a base station so that the wireless apparatus on the moving vehicle periodically transmits position information indicating its present position to the wireless apparatus in the base station. That enables the base station to manage positions of moving vehicles by using a PC (personal computer) or the like to process the position information acquired via the wireless apparatuses.

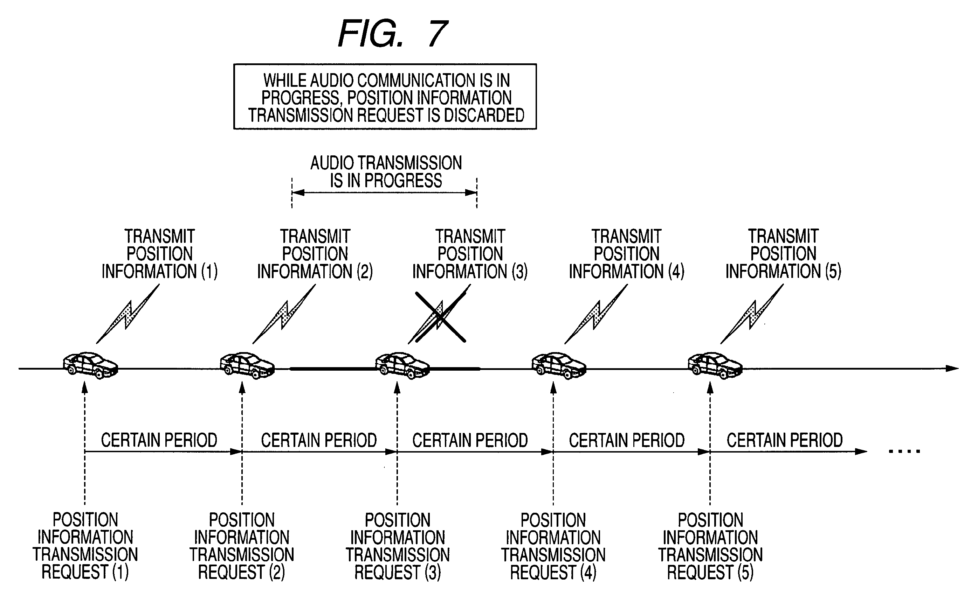

The wireless apparatus on the moving vehicle, having a GPS receiver, receives GPS information for each time period, generates and transmits position information, as shown in FIG. 7. Conventional wireless apparatuses, which transmit the position information through analog wireless communication systems which use MSK (Minimum Shift Keying) modulation, cannot transmit audio information in audible bands and the position information simultaneously, however. Therefore, if transmission of the position information is requested while the audio communication is in progress, the devices terminate the audio communication once and switch to the MSK modulation for the position information or discard the transmission request itself for the position information. Alternatively, there have been proposed methods for saving the position information which could not be transmitted in a memory and transmitting it all together when it can be transmitted (for example, see Patent Document 1).
Patent Document 1: Japanese Patent Application Laid-Open No. 2006-25253

### DISCLOSURE OF THE INVENTION

### PROBLEMS TO BE SOLVED BY THE INVENTION

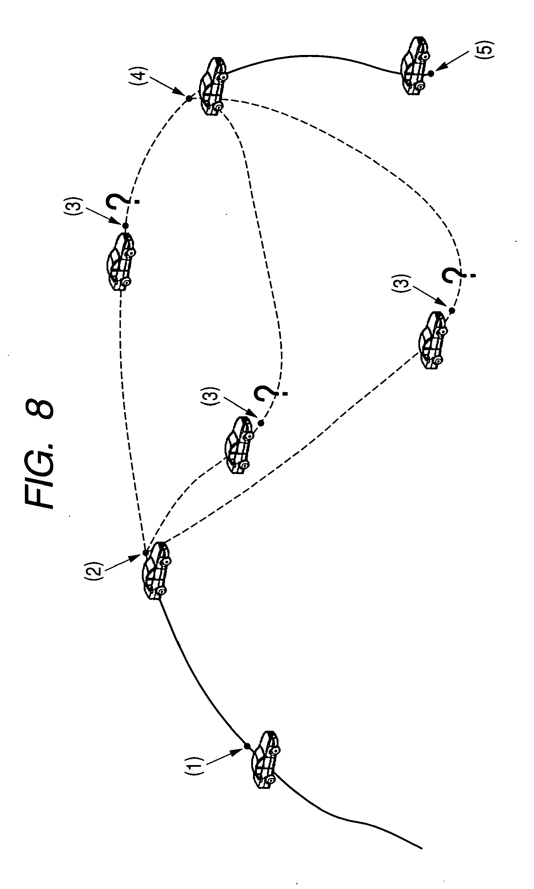

If the audio communication is terminated, however, the conversation is inconveniently interrupted. If the transmission request for the position information is discarded, the moving vehicle cannot be managed for the period covered by the position information. For example, as shown in FIG. 7, when the transmission requests for the position information (1) - (5) are issued periodically, and if the transmission request (3) which overlaps the audio communication is discarded, the position information of the moving vehicle corresponding to the timing of the transmission request (3) is lost as shown in FIG. 8, and accordingly, the base station cannot keep accurate moving vehicle management. According to the method for receiving the position information all together when it can be transmitted, the position history of the moving vehicle can be recognized but real-time position management cannot be performed.

The object of the present invention is to provide accurate position management even when the audio communication is in progress.

### MEANS FOR SOLVING THE PROBLEMS

According to the first aspect of the present invention, a wireless apparatus comprising: wireless communication means for transmitting and receiving information; and control means for acquiring position information indicating current position of the wireless apparatus and causing the wireless communication means to transmit the position information, wherein if audio information is being transmitted by the wireless communication means when the position information is to be transmitted, the control means embeds the position information in the audio information being transmitted and causes the wireless communication means to transmit it.

According to the second aspect of the present invention, the wireless apparatus according to claim 1, wherein when the audio information is to be transmitted or received, the control means generates audio information for transmission including the audio information and an empty region or empty regions and causes the wireless communication means to transmit it, and if the position information is to be transmitted while the audio information for transmission is being transmitted, the control means embeds the position information in the empty region or empty regions included in the audio information for transmission is provided.

According to the third aspect of the present invention, the wireless apparatus according to claim 1, wherein the control means embeds the position information by replacing a portion of audio information being transmitted by the wireless communication means with a piece of the position information is provided.

According to the fourth aspect of the present invention, the wireless apparatus according to claim 2, wherein the piece of the position information has header information added and is embedded in the empty region included in the audio information for transmission, and the header information includes information indicating that the embedded information is the position information, identification information of destination, and information indicating what order the piece of the position information is, is provided.

According to the fifth aspect of the present invention, the wireless apparatus according to claim 3, wherein the position information has the header information added and is embedded by being made to replace the portion of audio information, and the header information includes information indicating that the embedded information is the position information, identification information of destination, and information indicating what order the piece of the position information is, is provided.

According to the sixth aspect of the present invention, a wireless apparatus comprising: wireless communication means for transmitting and receiving information; and control means for detecting an embedded piece of position information in audio information received via the wireless communication means, extracting the detected piece of the position information, and reconstructing the original position information, is provided.

According to the seventh aspect of the present invention, the wireless apparatus according to claim 6, wherein the control means detects header information added to the embedded piece of the position information, and the header information includes information indicating that the embedded information is the position information, identification information of destination, and information indicating what order the piece of the position information is, and the control unit judges whether the received information is the audio information or the position information based on the header information, and reconstructs the original position information by combining the extracted pieces of the position information based on the information included in the header information indicating what order the piece of the position information is, is provided.

According to the eighth aspect of the present invention, the wireless apparatus according to claim [4] 6, comprising information communication means for outputting position information, wherein the control means generates the position information for output by using the reconstructed position information and causes the information communication means to output it, is provided.

### EFFECTS OF THE INVENTION

According to the present invention, the position information can be transmitted while the audio information is being transmitted. Securely transmitting the position information even while the audio information is being transmitted enables the receiving side to accurately manage the position of the mobile station or the like to which the wireless apparatus is installed, based on the position information.

Also, according to the present invention, the embedded piece of the position information can be acquired from the audio information. Therefore, the position information can be provided for position management even while the audio information is being transmitted, which enables accurate position management.

### BRIEF DESCRIPTION OF THE DRAWINGS

FIG. 1 is a diagram showing a wireless communication system including wireless apparatuses according to the embodiment;
FIG. 2 is a diagram showing a functional configuration of the wireless apparatus at a transmitting side and the wireless apparatus at a receiving side in FIG. 1;
FIG. 3 is a flowchart describing a flow of processing executed by the wireless apparatus at the transmitting side;
FIG. 4 is a diagram describing a method for embedding position information in audio information;
FIG. 5 is a flowchart describing a flow of processing executed by the wireless apparatus at the receiving side;
FIG. 6 is a diagram describing a method for embedding the position information according to another embodiment;
FIG. 7 is a diagram describing a method for transmitting the position information by a conventional wireless apparatus; and
FIG. 8 is a diagram describing a method for transmitting the position information by the conventional wireless apparatus.

### Description of Symbols

- 1: wireless communication system
- 10: wireless apparatus
- 20: wireless apparatus
- 11: information communication unit
- 12: storage unit
- 13: control unit
- 14: wireless communication system
- 15: audio conversion unit
- 16: audio processing unit
- 17: microphone
- 18: speaker
- 30: PC
- 40: GPS receiver

### BEST MODES FOR CARRYING OUT THE INVENTION

First, the configuration will be described.

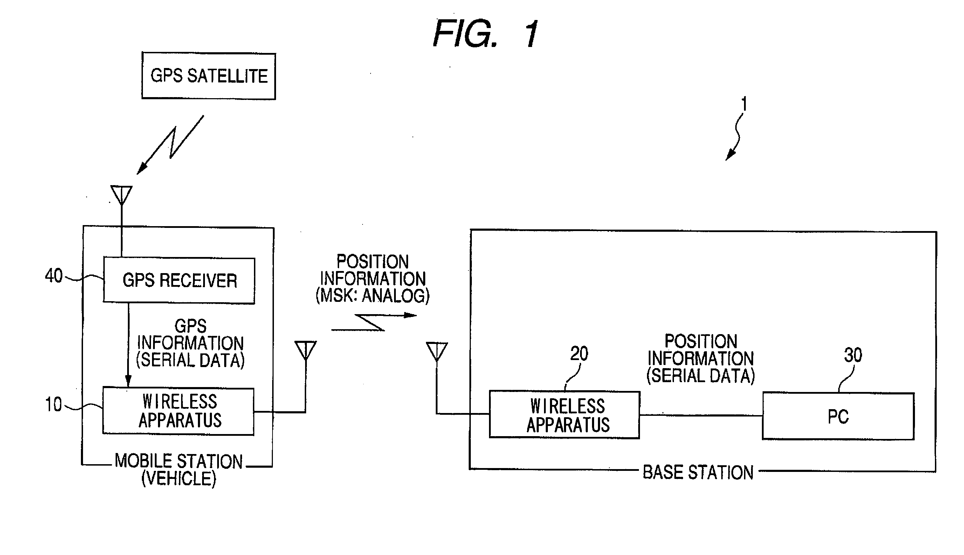

FIG. 1 shows a wireless communication system 1 which includes wireless apparatuses according to the embodiment.

The wireless communication system 1 includes a wireless apparatus 10 which is installed in a mobile station and a wireless apparatus 20 which is installed in the base station and connected to a PC 30 as shown in FIG. 1. The wireless communication system 1 has the wireless apparatus 20 receive position information indicating the current position of the mobile station from the wireless apparatus 10, and the PC 30 perform position management of the mobile station by using the position information.

Although FIG. 1 depicts that a unit for each of the wireless apparatus 10 and the wireless apparatus 20 is connected for convenience, the wireless apparatus 10 may be installed by the number of the mobile stations. The mobile station is a vehicle, for example.

The PC 30 is a general purpose computer. It has position management software installed and executes various processing for the position management such as displaying the current position of each of the mobile stations on a map by using the position information transmitted from the wireless apparatus 20 or generating history information of the position for each time.

Now, the wireless apparatus 10 and the wireless apparatus 20 according to the embodiment will be described.

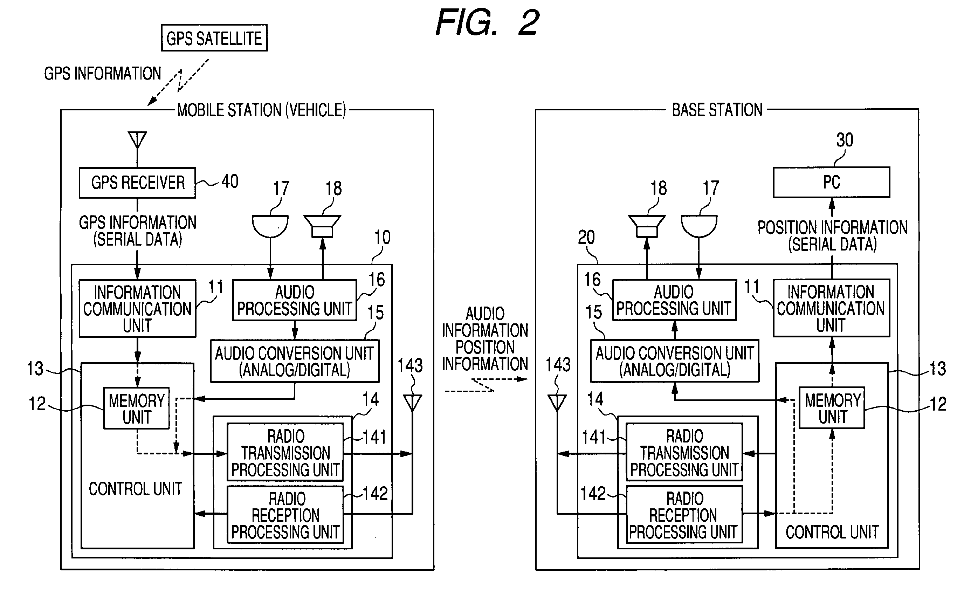

FIG. 2 is a diagram showing a functional configuration of the wireless apparatus 10 installed in the mobile station and the wireless apparatus 20 installed in the base station. The wireless apparatus 10 is connected to a GPS receiver 40, and the wireless apparatus 20 is connected to the PC 30.

First, the wireless apparatus 10 will be described.

As shown in FIG. 2, the wireless apparatus 10 includes an information communication unit 11, a storage unit 12, a control unit 13, a wireless communication unit 14, an audio conversion unit 15, an audio processing unit 16, a microphone 17, and a speaker 18.

The information communication unit 11 performs communication processing for receiving GPS information (serial data) from the GPS receiver 40. The GPS receiver 40 has a GPS antenna and detects a GPS signal transmitted from a GPS satellite. The GPS receiver 40 generates GPS information for transmission from the GPS signal for every certain time period and outputs it to the information communication unit 11. The information communication unit 11 outputs the GPS information received from the GPS receiver 40 to the control unit 13 as the position information. The position information is information such as the latitude, the longitude and the like indicating the current position of the mobile station, and includes information of time when the GPS information is sent out.

The control unit 13 includes a CPU (Central Processing Unit) and the like, and performs centralized control over operations of respective units by executing various operations in cooperation with programs. The control unit 13 further includes the storage unit 12, and when it acquires the position information from the information communication unit 11, it causes the storage unit 12 to store the information. The control unit 13 generates audio information for transmission from the audio information input from the audio conversion unit 15. In other words, it divides the audio information into a plurality of packets for packet transmission. The control unit 13 causes the wireless communication unit 14 to transmit periodically the position information which it caused the storage unit 12 to store.

The wireless communication unit 14 includes a wireless transmission processing unit 141, a wireless reception processing unit 142, and an antenna 143, and performs various processing for transmitting and receiving information on a wave.

The wireless transmission processing unit 141 includes an MSK encoder for converting such information for transmission as the position information into a signal by the MSK modulation, a modulator for performing FSK (Frequency Shift Keying) modulation on the converted signal or audio information, an amplifying circuit for amplifying the FSK modulated signal, and the like, and transmits the amplified signal from the antenna 143 on a wave.

The wireless reception processing unit 142 includes an amplifying circuit for amplifying the wave received via the antenna 143, a demodulator for demodulating the FSK modulation, an MSK decoder for decoding the signal converted by the MSK modulation, and the like, and recovers the original audio information or position information from the signal received on the wave.

The audio conversion unit 15 performs analog conversion or digital conversion on the audio information. Specifically, as the audio information input from the audio processing unit 16 is an analog signal, it converts the information into a digital signal and outputs the signal to the control unit 13, and as the audio information input from the control unit 13 is a digital signal, it converts the information into an analog signal and outputs the signal to the audio processing unit 16.

The audio processing unit 16 amplifies the audio information (analog audio signal) input through the microphone 17 and outputs the amplified information to the audio conversion unit 15. In contrast, it amplifies the audio information (analog audio signal) input from the audio conversion unit 15 and output the amplified information to the speaker 18.

Now, the wireless apparatus 20 will be described.

The wireless apparatus 20 has the same fundamental configuration as that of the wireless apparatus 10. Therefore, the same components as those of the wireless apparatus 10 are denoted by the same reference numerals and only the functional parts different from those of the wireless apparatus 10 are described.

The information communication unit 11 in the wireless apparatus 20 performs the communication processing for outputting the position information to the PC 30. Specifically, as the information communication unit 11 communicates with the PC 30 through a serial port, it converts the position information input from the control unit 13 into serial data for output and outputs the converted information to the PC 30.

When the wireless communication unit 14 receives the wave carrying the audio information or position information from the wireless apparatus 10 via the antenna 143, it decodes the wave by the wireless reception processing unit 142 and outputs the decoded wave to the control unit 13.

When the position information is input, the control unit 13 outputs it to the information communication unit 11, and when the audio information is input, the control unit 13 tries to detect whether the position information is embedded therein. If the position information is included, the control unit 13 extracts it and restores the original position information, and outputs it to the information communication unit 11.

Now, operations will be described.

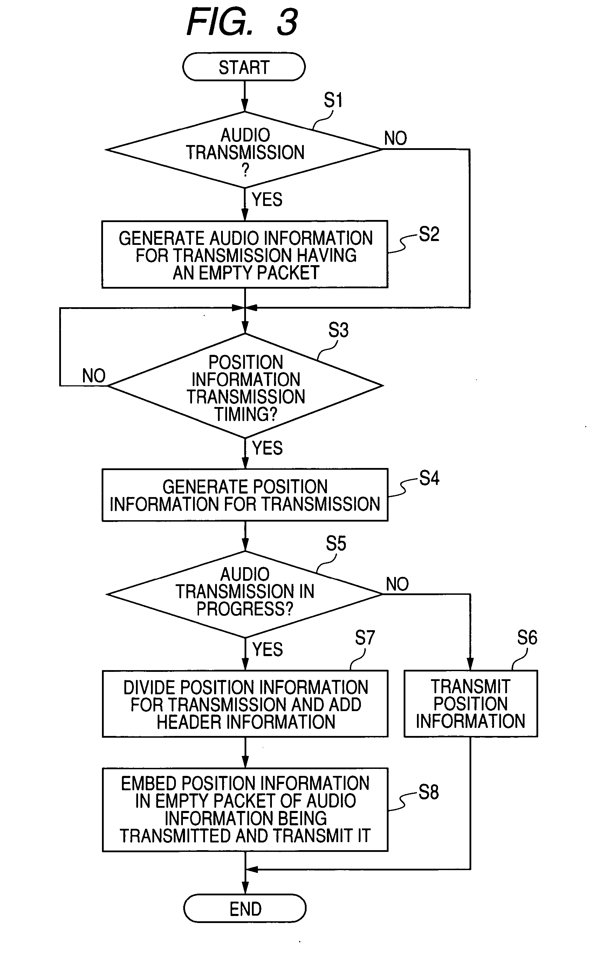

FIG. 3 is a flowchart describing a flow of processing executed by the wireless apparatus 10 in transmitting the position information to the wireless apparatus 20.

First, the control unit 13 judges whether the audio transmission is to start or not (step S1). When audio is input through the microphone 17 and the audio information is input from the audio conversion unit 15, the control unit 13 judges that the audio transmission is to start (step S1; Y), and generates the audio information for transmission from the input audio information (step S2).

The audio information for transmission refers to the audio information adapted for packet transmission. Specifically, it is the audio information divided into a plurality of packets with header information added to each frame which is formed by the packets. The header information is made to include information indicating that it is the audio information.

When the control unit 13 generates the audio information for transmission, it includes empty packets in the audio information. For example, it generates the audio information for transmission by including four empty packets for four packets of the audio information to form one frame.

On the other hand, when the audio information is not input, the control unit 13 judges that the audio transmission is not to start (step S1; N), and proceeds to the processing in step S3 without generating the audio information.

Incidentally, even during the above mentioned period, the GPS information is sent out from the GPS receiver 40 to the information communication unit 11 for every certain time period. The information communication unit 11 outputs it to the control unit 13 as the position information and the control unit 13 causes the storage unit 12 to store the position information.

When the control unit 13 judges that the time preset to transmit the position information has come (step S3; Y), it reads out the position information corresponding to the transmission time from the storage unit 12. For example, if the GPS information is output for every one second, the control unit 13 acquires the position information at a different time for every one second. In that case, if the control unit 13 is set to transmit the position information for every ten seconds, it reads out the position information at the times corresponding to the-ten second periods.

Next, the control unit 13 generates the position information for transmission by using the read out position information (step S4). Specifically, it divides the position information into a plurality of packets for packet transmission. Then, the control unit 13 judges whether the audio information is currently being transmitted or not (step S5). As the control unit 13 is performing the processing associated with generation of the audio information for transmission when the audio information is being transmitted, it makes the judgment according to whether there is the audio information being processed or not.

If the control unit 13 judges that the audio information is not being transmitted because the audio information is not being processed, it outputs the generated position information for transmission to the wireless communication unit 14. The wireless communication unit 14 causes the wireless transmission processing unit 141 to convert the position information into a signal, and then transmits the signal on a wave to the wireless apparatus 20 (step S6).

On the other hand, when the control unit 13 judges that the audio information is being transmitted because the audio information is being processed, it divides the generated position information for transmission into pieces again for being embedded, and adds header information to the pieces (step S7). Then, it reads out the audio information stored in the storage unit 12, embeds the pieces of the position information in the empty packets in the audio information and outputs them to the wireless communication unit 14. The wireless communication unit 14 makes the wireless transmission processing unit 141 to convert the audio information into a signal, and then, transmits the signal on a wave to the wireless apparatus 20 (step S8).

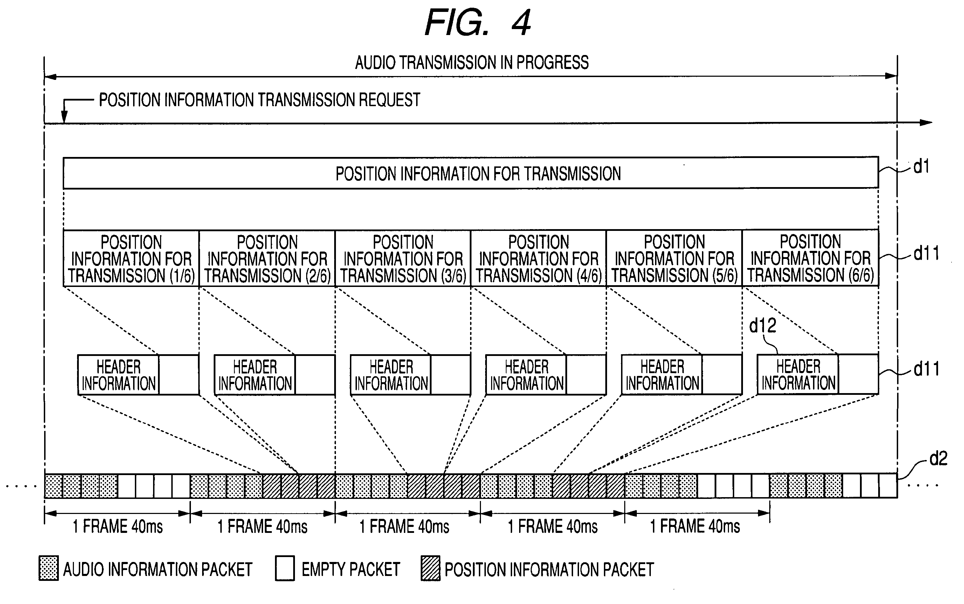

A specific description will be made with reference to FIG. 4.

As shown in FIG. 4, when the audio information is being transmitted, audio information for transmission d2 which has been divided into each packet is generated. As mentioned above, each frame of the audio information for transmission d2 definitely includes an empty packet in addition to the packets of the audio information. Accordingly, the control unit 13 divides the position information d1 into six parts and adds the header information d12 to each of the divided pieces of the information d11, as shown in FIG. 4. The header information d12 includes information indicating that each of the divided pieces of the information d11 with the header information d12 being added is the position information, identification information of destination, and information indicating the number of divisions and what order the piece of the position information is in the number of divisions. The control unit 13 embeds each of the divided pieces of the position information d11 and d12 in two empty packets in one frame of the audio information d2. As a result, it will transmit the audio information d2 which has the frames storing the audio information and the position information therein to the wireless apparatus 20.

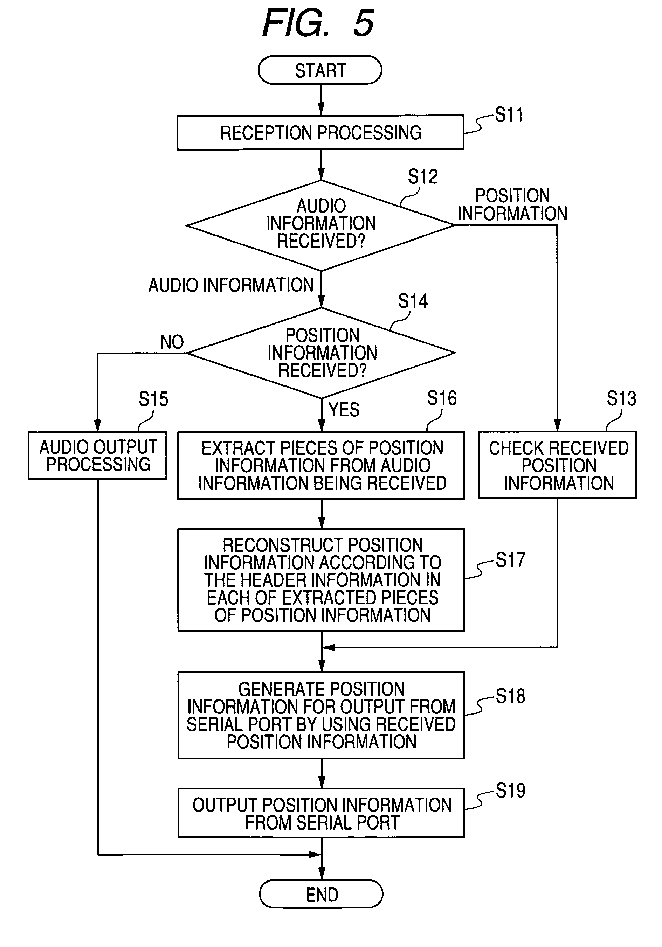

Next, with reference to FIG. 5, the processing executed by the wireless apparatus 20 when it receives the audio information will be described.

First, when a wave is received via the antenna 143, the processing for receiving is performed by the wireless reception processing unit 142 in the wireless communication unit 14 (step S11). Specifically, it restores the information (audio information or position information) from the received wave. It outputs the restored information to the control unit 13.

The control unit 13 causes the storage unit 12 to store the received information. Then, the control unit 13 judges whether the received information is the audio information or the position information by referencing the first header information of the stored information (step S12). If information indicating the position information is included in the header information, it judges that it received the position information (step S12; position information). The control unit 13 checks whether all the packets which form the position information have been received or not by referencing the header information in each packet (step S13). After it has checked, it proceeds to the processing in step S18 to be described later.

On the other hand, when the control unit 13 judges that it received the audio information because the information indicating the audio information is included in the header information (step S12; audio information); then it tries to detect the position information embedded in the audio information. If the header information indicating the presence of the position information is not in the audio information and the position information is not detected (step S14; N), the control unit 13 outputs the audio information to the audio conversion unit 15. The audio conversion unit 15 and the audio processing unit 16 execute output processing of the audio information by performing D/A conversion and signal amplification on the audio information, respectively (step S15).

When the header information indicating the position information is included in the audio information and the position information is detected (step S14; Y), the control unit 13 extracts the position information from the audio information (step S16). The audio information after having the position information extracted is output to the audio processing unit 15. The output processing is executed by the audio conversion unit 15 and the like.

The control unit 13 reconstructs the original position information according to the header information in each of the extracted pieces of the position information. Specifically, as the header information includes information indicating the total number of the divided pieces of the position information and what order the piece of the position information is from the top, it reconstructs the original position information by combining the extracted pieces of the position information (divided piece of information) in proper order according to the header information. Then, it checks whether all the packets that form the position information have been received or not by referencing the header information in each packet (step S17).

After the control unit 13 has checked, it generates the position information for output to the serial port in order to output the reconstructed position information to the PC 30 (step S18). Then, it causes the generated position information for output to the serial port to be output from the serial port of the information communication unit 11 to the PC 30 (step S19).

The PC 30 performs the processing for position management of the mobile station having the wireless apparatus 10 installed therein by using the position information input from the wireless apparatus 20.

As mentioned above, according to the present invention, the wireless apparatus 10 installed at the mobile station side acquires the position information indicating the current position of the wireless apparatus 10 from the GPS information sent out from the GPS receiver 40. Then, if the audio information is being transmitted when the position information is to be transmitted to the wireless apparatus 20 at the base station side, the wireless apparatus 10 embeds the position information in the audio information and transmit it. Accordingly, the wireless apparatus 10 can transmit the position information as well while keeping the transmission of the audio information. Transmitting the position information definitely at the periodical time when it is to be transmitted enables the base station to perform accurate position management of the mobile station.

Since the audio information and the position information are transmitted at the same time, the number of communication sessions can be reduced, which lightens the communication traffic in the wireless communication system 1. Besides, it is efficient because the processing for establishing the communication and the like also need to be performed once.

By having generated the audio information for transmission which includes the audio information and the empty packets and made it ready to be transmitted even when only the audio information is transmitted, the position information can be simply embedded by only storing the pieces of the position information in the empty packets of the audio information for transmission, if the position information is to be transmitted.

The wireless apparatus 20 at the base station side detects the embedded position information from the audio information transmitted from the wireless apparatus 10 and reconstructs the original position information. As a result, the position information of each mobile station can be acquired and provided for the position management at the base station side.

Besides, based on the reconstructed position information, the wireless apparatus 20 generates the position information for output for being output to the PC 30 which executes the position management processing and outputs the information. As a result, it can provide the position information for the PC 30, and the PC 30, in turn, can perform position management by using the position information.

The above-mentioned embodiment is a preferred example which has the present invention applied thereto, and the present invention is not limited to the embodiment.

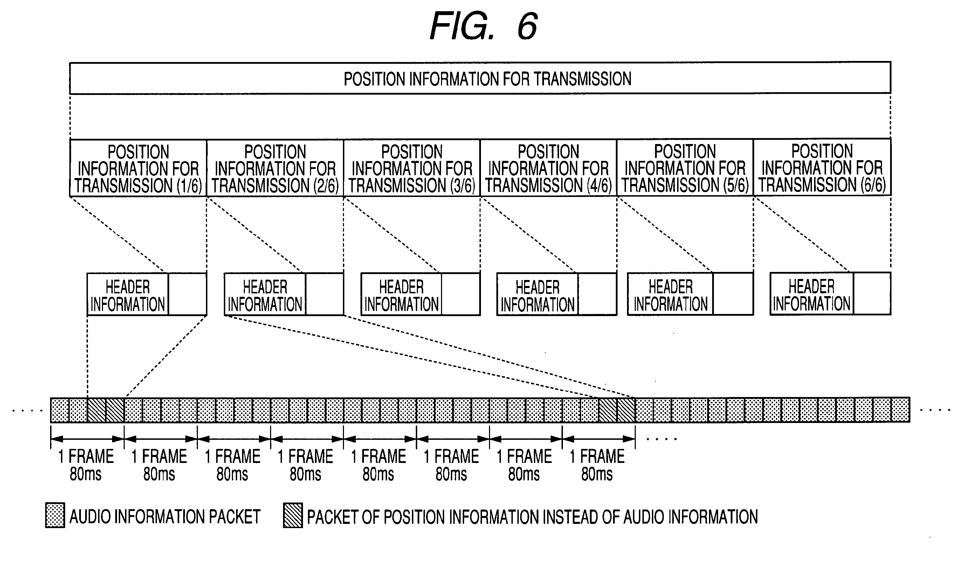

For example, although the above-mentioned embodiment enables the position information to be embedded by always having the audio information for transmission include empty packets therein; an empty packet cannot be included in some cases such as the case in which the position information and the audio information have different transmission rates. In such a case, it may be adapted to have a portion of audio information replaced with the position information as shown in FIG. 6, instead of having an empty region for embedding included in advance. Specifically, a portion of audio information is deleted and the position information is embedded in the packet region which has become empty by the deletion. In that case, although the audio information is partially lost, the position information can be transmitted at the same time while the audio degradation in terms of hearing is reduced by adjusting the data volume to be deleted as little as not affecting the audio listening and by deleting parts of the audio information for a long time period for the position information to be embedded.

The modulation is merely an example, and the present invention is not limited to that. Since the MSK modulation cannot increase the transmission rate, other modulation such as π/4QPSK and 4-valued FSK which can increase the transmission rate may be used.

## Claims

1. A wireless apparatus comprising: wireless communication means for transmitting and receiving information; and control means for acquiring position information indicating current position of the wireless apparatus and causing said wireless communication means to transmit the position information,
wherein, if audio information is being transmitted by said wireless communication means when the position information is to be transmitted, said control means embeds the position information in the audio information being transmitted and causes said wireless communication means to transmit the position information.

2. The wireless apparatus according to claim 1, wherein when the audio information is to be transmitted or received, said control means generates audio information for transmission including the audio information and an empty region or empty regions and causes said wireless communication means to transmit the audio information, and if the position information is to be transmitted while the audio information for transmission is being transmitted, said control means embeds the position information in the empty region or empty regions included in the audio information for transmission.

3. The wireless apparatus according to claim 1, wherein said control means embeds the position information by replacing a portion of audio information being transmitted by said wireless communication means with a piece of the position information.

4. The wireless apparatus according to claim 2, wherein the piece of the position information has header information added and is embedded in the empty region included in the audio information for transmission, and the header information includes information indicating that the embedded information is the position information, identification information of destination, and information indicating what order a piece of the position information is.

5. The wireless apparatus according to claim 3, wherein the position information has the header information added and is embedded by being made to replace the portion of audio information, and the header information includes information indicating that the embedded information is the position information, identification information of destination, and information indicating what order the piece of the position information is.

6. A wireless apparatus comprising:
wireless communication means for transmitting and receiving information; and
control means for detecting an embedded piece of position information in audio information received via said wireless communication means, extracting the detected piece of the position information, and reconstructing the original position information.

7. The wireless apparatus according to claim 6, wherein said control means detects header information added to the embedded piece of the position information, and the header information includes information indicating that the embedded information is the position information, identification information of destination, and information indicating what order the piece of the position information is, and said control unit judges whether the received information is the audio information or the position information based on the header information, and reconstructs the original position information by combining the extracted pieces of the position information based on the information included in the header information indicating what order the piece of the position information is.

8. The wireless apparatus according to claim 6, comprising:
information communication means for outputting position information, wherein said control means generates the position information for output by using the reconstructed position information and causes said information communication means to output it.
